(19) Europäisches Patentamt
European Patent Office
Office européen des brevets

(11) Publication number: **0 073 253**
**A1**


(12) # EUROPEAN PATENT APPLICATION

published in accordance with Art. 158(3) EPC


(21) Application number: **82900662.6**

(51) Int. Cl.³: **B 23 P 1/08**

(22) Date of filing: **05.03.82**

Data of the International application taken as a basis:

(86) International application number:
**PCT/JP 82/00059**

(87) International publication number:
**WO 82/03035 (16.09.82 82/22)**

(30) Priority: **05.03.81 JP 31592/81**

(43) Date of publication of application: **09.03.83**
**Bulletin 83/10**

(84) Designated Contracting States: **CH DE FR GB LI**



(71) Applicant: **Fanuc Ltd, 5-1, Asahigaoka, 3-chome, Hino-shi, Tokyo 191 (JP)**

(72) Inventor: **OBARA, Haruki, 844-7, Hashimoto Sagamihara-shi, Kanagawa 229 (JP)**
Inventor: **INOUE, Michiya, 5-28-6, Nishihirayama Hino-shi, Tokyo 191 (JP)**
Inventor: **IZUMIYA, Shunzo, Tategaoka-Danchi 4-7-302, 1079 Tatemachi, Hachioji-shi Tokyo 193 (JP)**

(74) Representative: **Billington, Lawrence Emlyn et al, HASELTINE LAKE & CO Hazlitt House 28 Southampton Buildings Chancery Lane, London WC2A 1AT (GB)**


(54) **PULSE GENERATOR FOR ELECTRIC DISCHARGE MACHINING APPARATUS.**


(57) Manual switches (1a) and (11a) of an ON-time setting unit (1) and an OFF-time setting unit (11) are set to a desired setpoint, then the switches which are related to the setpoint through decoders (2) and (12), in switching circuits ($3_o$) and ($13_o$) are closed, setting the operating times of timers (4) and (14), which have RC time constant circuits. Timers (4) and (14) are operated under mutual restrictions by gate circuits synchronized with the timing pulses from an oscillator (5). The output pulse of the timer (4) controls discharge circuit (6) so as to adjust the output of a wire electrode (8) of an electrical discharge machining apparatus.


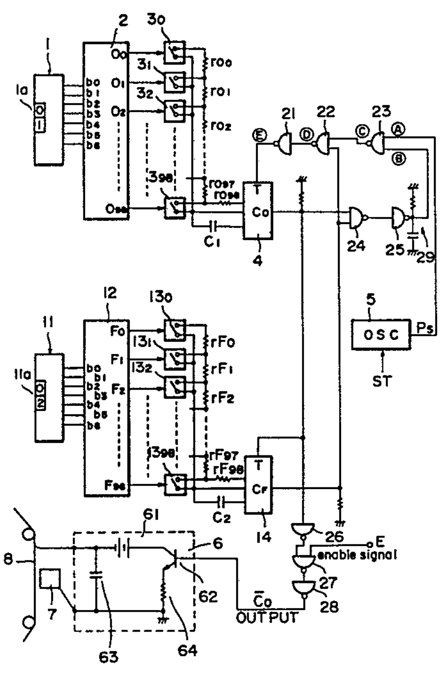



EP 0 073 253 A1

DESCRIPTION

PULSE GENERATING APPARATUS FOR ELECTRIC DISCHARGE MACHINE

Technical Field

This invention relates to an electric discharge machine and, more particularly, to the pulse generating circuit of an electric discharge machine which enables the on-time, off-time and pulse-repetition time of pulses applied to a wire-cut electric discharge machine to be set at will.

Background Art

A wire-cut electric discharge machine is one in which a wire electrode is brought extremely close to a workpiece immersed in a machining liquid and a voltage is applied across the wire electrode and the workpiece while the wire electrode is travelling in the longitudinal direction thereof, the workpiece being cut by the energy of the spark produced between it and the electrode. The voltage applied across the wire electrode and workpiece ordinarily has a pulsed waveform, the repetition frequency, pulse on-time and off-time whereof are determined by such factors as the material and thickness of the workpiece, the diameter of the wire electrode, the type of machining liquid and the cutting speed, etc. In a wire-cut electric discharge machine, therefore, a desirable arrangement is one in which the pulse repetition frequency, pulse on-time and pulse off-time can be finely set. While even prior-art wire-cut electric discharge machines enable the pulse repetition frequency as well as the pulse on-time and off-time to be set, those in which it is possible to finely set the pulse on-time and off-time, aside from the pulse repetition frequency, have not been possessed of a simple construction.

Accordingly, the present invention seeks to improve upon the abovementioned defect.

Disclosure of the Invention

The object of the present invention is to provide a simply constructed pulse generating circuit in a wire-cut electric discharge machine which enables the repetition frequency, pulse on-time and pulse off-time of a voltage applied across a workpiece and wire electrode to be set at will. A construction is adopted in which there are provided a first timer the operating time whereof is set in accordance with an on-time setting, and a second timer the operating time whereof is set in accordance with an off-time setting. The timers are operated alternatingly, with one timer being actuated in response to the end of the operation of the other. Such an arrangement controls the operation of the pulse generating circuit of an electric discharge machine.

Brief Description of the Drawings

Fig. 1 is a circuit diagram illustrating an embodiment of the present inventio, Fig. 2 is a block diagram of a timer, and Fig. 3 is a waveform diagram illustrating waveforms associated with various portions of the circuit shown in Fig. 1.

Best Mode for Carrying Out the Invention

An embodiment of the present invention will now be described with reference to the drawings to explain the invention in greater detail.

Fig. 1 is a circuit diagram illustrating an embodiment of the present invention. In the Figure, numeral 1 denotes an on-time setting device having a manual switch 1a for setting a numerical value. By way of example, the on-time setting device 1 is capable of making a selection from any one of steps "1" to "99" to produce a binary signal, as bits $b_0$ through $b_6$, corresponding to the selected numerical value. Numeral 2 designates a decoder having output terminals $O_0$ through $O_{98}$ of which those corresponding to the input binary signal go to logical "1". Numerals $3_0$ through $3_{98}$ denote switching circuits. Each of these switching circuits incorporates a single switching element which is closed when the energizing terminal thereof connected to a corresponding one of the output terminals of decoder 2 goes to logical "1".

Resistance elements for setting on-time are designated at $rO_0$ through $rO_{98}$. C1 denotes a capacitor, also for setting on-time. Numeral 4 denotes a timer, such as one manufactured by National Semiconductor Corporation, part number LM 322. Ordinarily, the output terminal Co of timer 4 is at a "1" logic level. When a "1" is applied to the trigger terminal T thereof, the logic level of output terminal Co drops to "0". The output terminal Co reverts to the "1" logic level following the passage of a length of time decided by a time constant formed by the capacitor C1 and the magnitude of the resistance element selected from the resistance elements $rO_0$ through $rO_{98}$.

Fig. 2 is a block diagram of the timer 4. Initially, the output V1 of a latch buffer LB is latched at a high level. In consequence, a transistor Q1 is saturated (on), so that the capacitor C1 is in the discharge state. In addition, the output of a NOR gate NOR is at a low level, turning off a transistor Q2 so that a high level appears at the output terminal Co of the timer 4. When a "1" trigger pulse is applied to the trigger terminal T, the output V1 of the latch buffer LB assumes a low level, turning transistors Q2, Q3 on and turning transistor Q1 off. As a result, a low level appears at the timer output Co and the capacitor C1, connected between a terminal R/C and ground GND, is charged at a time constant R1C1. When the charging operation causes the voltage at terminal R/C to reach a reference voltage Er provided by a reference voltage generator RVG, a comparator COM senses the event and causes the output V1 of the latch buffer LB to be latched at the high level. When this occurs, transistor Q1 is turned on and capacitor C1 is discharged, restoring the initial conditions.

Returning to Fig. 1, numeral 11 denotes an off-time setting device having a manual switch 11a for setting a numerical value. The off-time setting device 11 is capable of making a selection from any one of steps "1" to "99" to produce a binary signal, as bits $b_0$ through $b_6$, corresponding to the selected numerical value, just as the on-time setting device. Numeral 12 designates a decoder having output terminals $F_0$ through $F_{98}$ of which those corresponding to the input binary signal go to logical "1". Numerals $13_0$ through $13_{98}$ denote switching circuits. Each of these switching circuits incorporates a single switching element which is closed when the energizing terminal thereof connected to a corresponding one of the output terminals of decoder 12 goes to logical "1". Resistance elements for setting off-time are designated at $rF_0$ through $rF_{98}$. C2 denotes a capacitor, also for setting off-time. Numeral 14 denotes a timer which, having the same construction and operating in the same manner as the timer 4, is not described again here. An oscillator 5 generates a high-frequency signal of 1 MHz. Numeral 6 denotes a discharge circuit which includes a DC power supply 61, a power switching element 62, a discharge capacitor 63, and a resistor 64. Numeral 7 denotes a workpiece to undergo machining, and 8 a wire electrode. Numerals 21 through 28 designate gating circuits, and 29 a differentiating circuit for invalidating the output of the oscillator 5.

The operation of the embodiment will be described next.

Initially, gate 27 is closed owing to "0" logic at an enable terminal E, which is one of the input terminals to the gate. In consequence, the application of a pulsed voltage to the electric discharge machine 6 is suspended. Manual switch 1a is set to, say, "01". Step "01" is the shortest on-time of those which are capable of being set. Next, manual switch 11a is set to, say, "02". Step "02" is the second shortest off-time of those which are capable of being set.

When manual switch 1a has been set, all of the bits $b_o$ through $b_6$ of the on-time setting device 1 go to logical "0", the signal constituted by these bits being applied to the decoder 2. The output terminal $O_0$ of decoder 2 goes to logical "1" immediately in response to the signal from the setting device, and switching circuit $3_0$ is turned on by the "1" signal at terminal $O_0$.

When manual switch 11a has been set, only bit $b_1$ of the off-time setting device 11 goes to logical "1"; all of the remaining bits $b_0$ and $b_2$ through $b_6$ are at logical "0". The signal so defined is applied to the decoder 12, the output terminal F1 whereof immediately goes to logical "1" in response thereto. Switching circuit $13_1$ is turned on in response to the "1" signal.

When switching circuit $3_0$ is turned on, all of the resistance elements from $rO_0$ to $rO_{98}$ are connected in series with the timer 4, so that the operating time of the timer 4 is set by the time constant formed by the total resistance $R_{00}$ of these resistance elements and the capacity of capacitor C1.

When switching circuit $13_0$ is turned on, all of the resistance elements with the exception of $rF_0$, that is, the resistance elements from $rF_1$ to $rF_{98}$, are connected in series with the timer 14, so that the operating time of the timer 14 is set by the time constant formed by the total resistance $R_{F1}$ of these resistance elements and the capacity of capacitor C2.

The timers 4, 14 produce logical "1" at their output terminals Co, CF when in the inoperative state, and logical "0" when in the active state. When the trigger terminal T makes the transition from "0" to "1", the corresponding timer 4, 14 is set into operation. Such operation is suspended upon the passage of a predetermined length of time which is set by the capacitance and resistance values.

Fig. 3 is a waveform diagram illustrating waveforms associated with various portions of the pulse generating apparatus shown in Fig. 1. The operative description of the invention will now be resumed while referring to Figs. 1 and 3. The oscillator 5 generates the pulses Ps of a comparatively high frequency in response to a start signal ST. The first pulse so generated is applied to one input terminal of the gate 23, so that point A goes to logical "0" (sic). Since a capacitor in the differentiating circuit 29 is initially in the charged state, point B is at logical "1". As a result, when point A goes to "0", point C goes to "1", point D goes to "0" and point E, namely the trigger terminal T of timer 4, goes to "1". When logical "1" is impressed upon the trigger terminal T of timer 4, the latter is set into operation so that the output terminal Co goes to logical "0". In response thereto, the output of a NAND gate 25 goes to logical "0", so that the charge stored in the capacitor of the differentiating circuit 29 is discharged, sending point B to "0". As a result, the pulses generated by the oscillator 5 are thenceforth rendered meaningless. Upon passage of the time $C_1R_{00}$, the output terminal Co of timer 4 changes from "0" to "1", and timer 4 stops operating. Since the output signal Co of timer 4 is coupled to the trigger terminal T of the timer 14, the latter is set into operation so that the output terminal CF thereof goes to logical "0". When time $C_2R_{F1}$ elapses, the output terminal CF of timer 14 changes from "0" to "1" and timer 14 ceases operating, whereupon point E goes to logical "1" to restore the state shown at time t1 in Fig. 3 so that the foregoing cycle of operation is repeated. The end result is that the output terminal Co of timer 4 develops a pulsed signal which is at the "0" level during operation of timer 4 and at the "1" level during operation of timer 14. When this condition has been established and the enable terminal E then goes to logical "1", the output signal from timer 4 is applied to the discharge circuit 6 following inversion, whereby the power switching element 62 is turned on during the on-time portions of the signal. After the discharge capacitor 63 has been charged during such an on-time portion, a discharge is

induced across the workpiece 7 and wire electrode 8 to cut the workpiece. On the other hand, the power switching element 62 is turned off during the off-time portions of the signal, suspending the charging of the discharge capacitor 63. This well-known operation is repeated so that the machining of the workpiece 7 may proceed.

When it is desired to change the duration of the on-time and (or) off-time portions of the signal, it is obvious that this can be accomplished merely by setting the manual switches 1a, 11a to the desired steps.

In the foregoing embodiment, the manual setting switches have 99 steps and the decoders 99 outputs. In actual practice, however, the number of steps can be increased to enable very fine setting of the on-time and off-time durations. The switching circuits can employ contact switches such as reed relays, or contactless elements using solid state techniques.

Industrial Applicability

In accordance with the present invention as described in detail hereinabove, the construction of a pulse generating apparatus can be greatly simplified since a pulse signal applied to an electric discharge machine is obtained merely by the alternating actuation of two timers the operating time whereof can be set at will. Since the operating time of the timers can be set with great precision, moreover, the on-time (pulse width), off-time (quiescent time) and pulse repetition time of the pulses applied to the electric discharge machine can be set accurately and as desired, and changed very simply as well.

The pulse generating apparatus according to the present invention demonstrates maximum effectiveness when used as a pulse generating apparatus for a wire-cut electric discharge machine. It goes without saying, however, that the apparatus is applicable to electric discharge machines other than those of the wire-cut type.

WHAT IS CLAIMED IS:

A pulse generating apparatus for an electric discharge machine, characterized by having means for setting on-time, a first timer the operating time whereof is set by said means, means for setting off-time, a second timer the operating time whereof is set by said means, and gating circuitry for actuating said first and second timers alternatingly, the second timer being rendered operational in response to the end of operation of the first timer, and the first timer being rendered operational in response to the end of operation of the second timer.

0073253

1

# Fig. 1

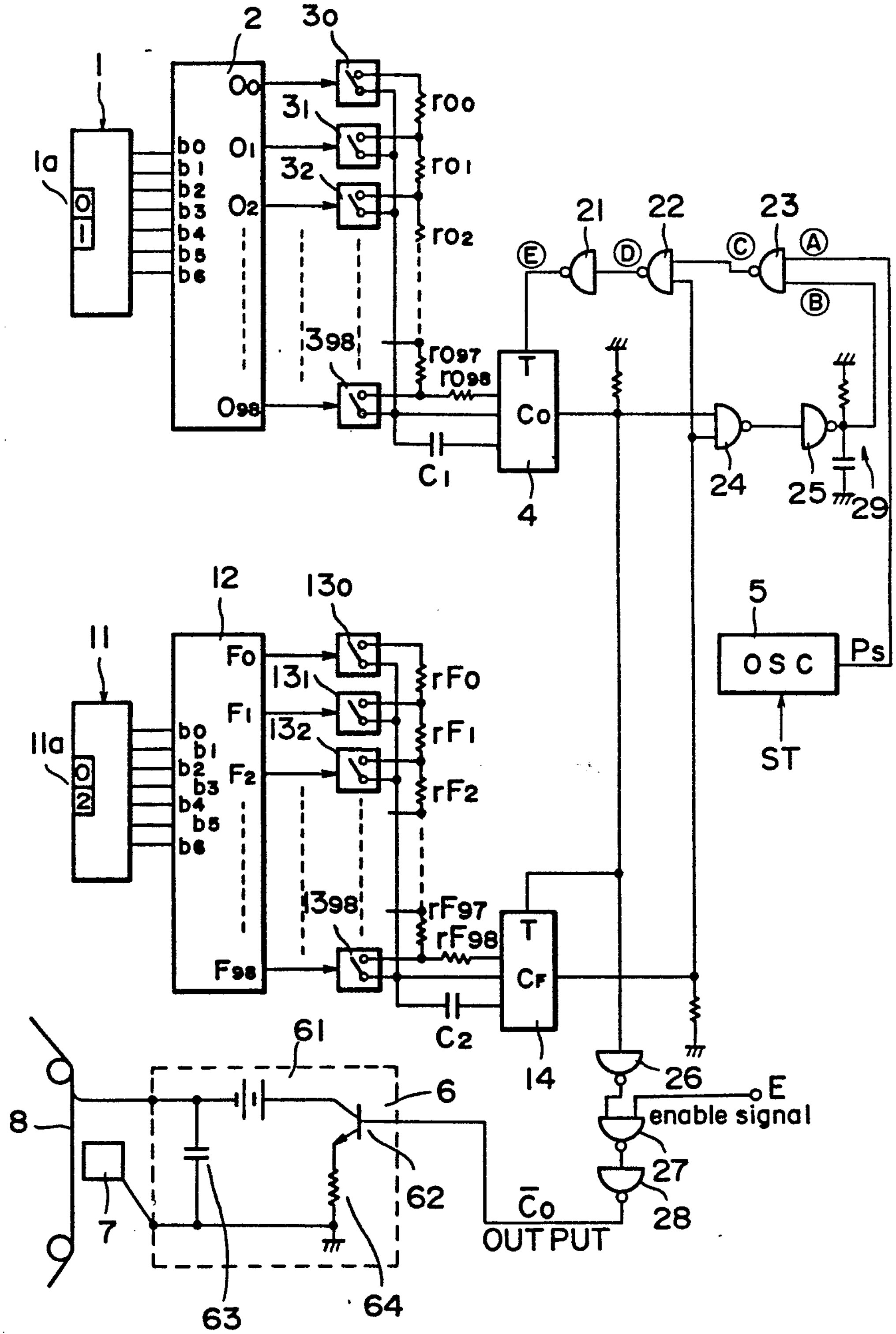

Fig. 2

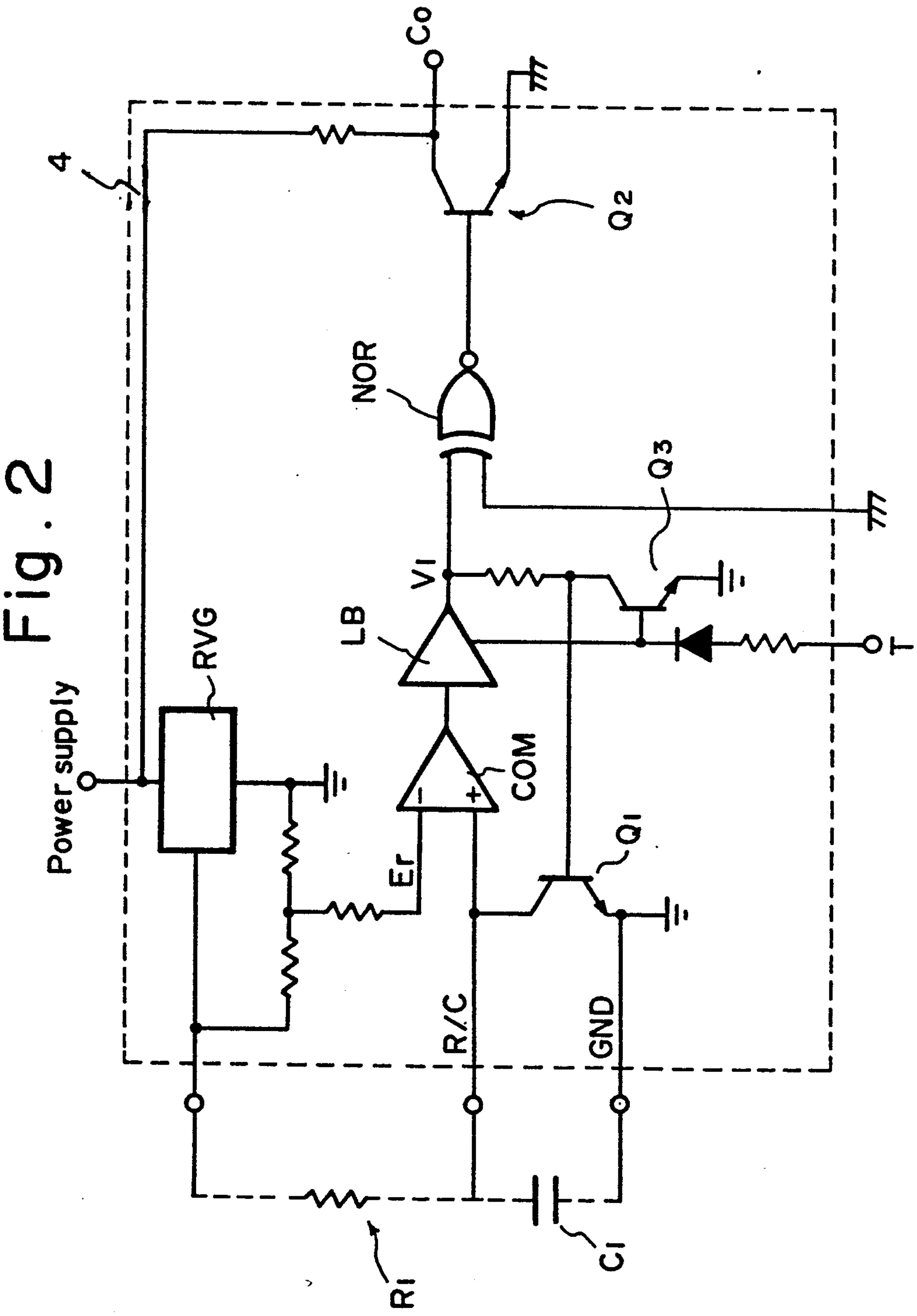

0073253

3

Fig. 3

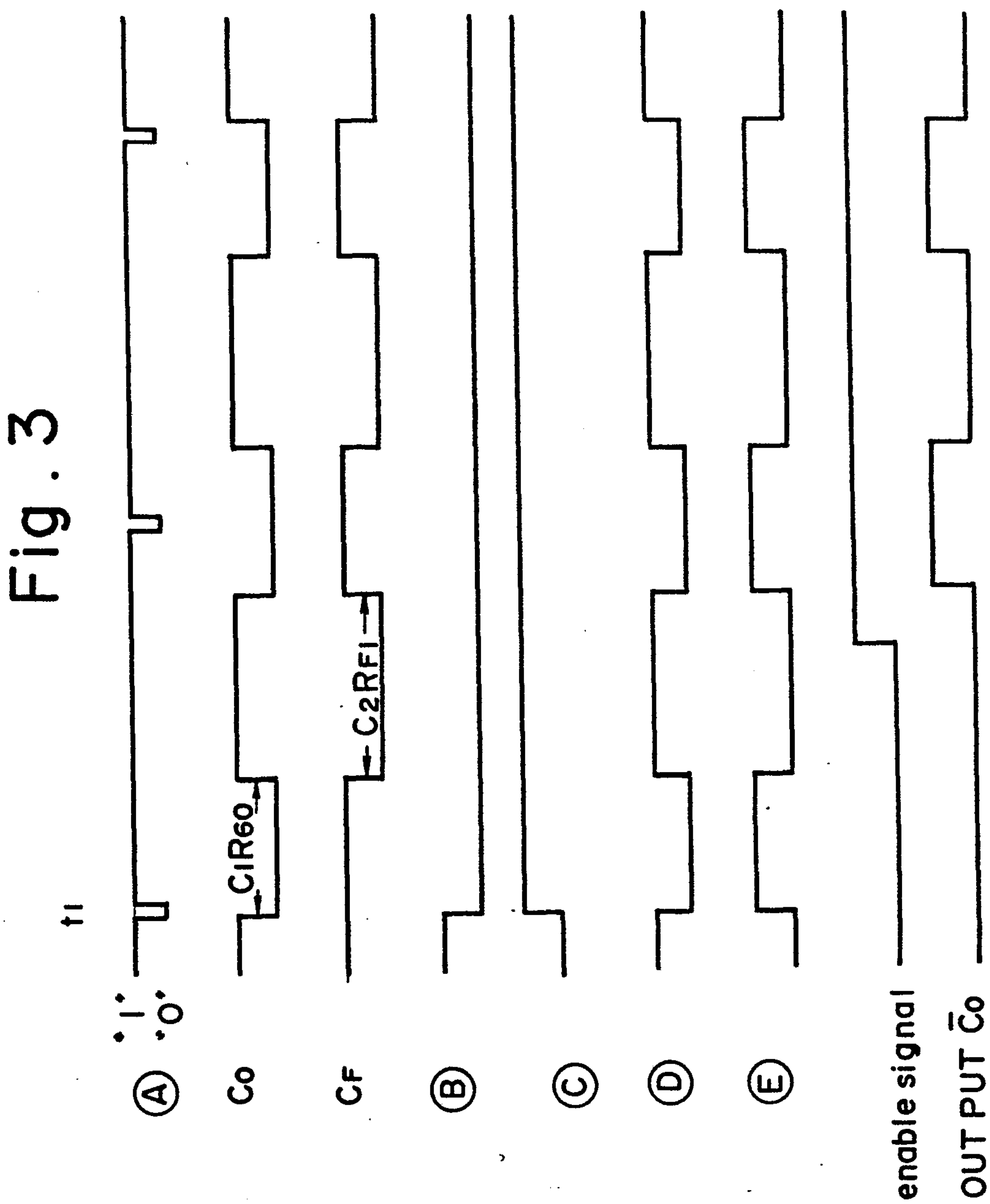

0073253

# INTERNATIONAL SEARCH REPORT

International Application No PCT/JP 82/00059

**I. CLASSIFICATION OF SUBJECT MATTER** (if several classification symbols apply, indicate all) [3]

According to International Patent Classification (IPC) or to both National Classification and IPC

Int. $Cl^3$ B23P 1/08

**II. FIELDS SEARCHED**

Minimum Documentation Searched [4]

| Classification System | Classification Symbols |
|---|---|
| IPC | B23P 1/00 |

Documentation Searched other than Minimum Documentation to the Extent that such Documents are Included in the Fields Searched [5]

Jitsuyo Shinan Shutsugan Kokoku Koho 1957 - 1981
Kokai Jitsuyo Shinan Koho 1971 - 1981

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| X | DE,A, 2 804,636 (A.D. CHARMILLES) 24,August,1978 (24.8.78) & JP,A,53-105795<br><br>"X" document of particular relevance; the claimed invention cannot be considered novel or cannot be considered to involve an inventive step<br><br>"&" document member of the same patent family | 1 |

* Special categories of cited documents: [15]
"A" document defining the general state of the art
"E" earlier document but published on or after the international filing date
"L" document cited for special reason other than those referred to in the other categories
"O" document referring to an oral disclosure, use, exhibition or other means
"P" document published prior to the international filing date but on or after the priority date claimed
"T" later document published on or after the international filing date or priority date and not in conflict with the application, but cited to understand the principle or theory underlying the invention
"X" document of particular relevance

**IV. CERTIFICATION**

| Date of the Actual Completion of the International Search [2] | Date of Mailing of this International Search Report [2] |
|---|---|
| March 17, 1982 (17.03.82) | April 5, 1982 (05.04.82) |
| International Searching Authority [1] | Signature of Authorized Officer [20] |
| Japanese Patent Office | |